# EUROPÄISCHE PATENTSCHRIFT

(11) **EP 2 304 387 B1**
(45) Veröffentlichungstag und Bekanntmachung des Hinweises auf die Patenterteilung: **21.01.2015**
(21) Anmeldenummer: 09765542.7
(22) Anmeldetag: 28.05.2009
(51) Int. Cl.: G01B 21/04

(54) **HALTEEINRICHTUNG ZUM HALTEN EINES KALIBRIERKÖRPERS UND VERFAHREN ZUM KALIBRIEREN EINES MESSSENSORS EINES KOORDINATENMESSGERÄTS**
HOLDING DEVICE FOR SECURING A CALIBRATION ELEMENT, AND METHOD FOR CALIBRATING A MEASURING SENSOR OF A COORDINATE MEASURING INSTRUMENT
DISPOSITIF DE RETENUE POUR RETENIR UN ÉLÉMENT D'ÉTALONNAGE ET PROCÉDÉ D'ÉTALONNAGE D'UN CAPTEUR DE MESURE D'UN APPAREIL DE MESURE DE COORDONNÉES

(30) Priorität: 20.06.2008 DE 102008028986
(43) Veröffentlichungstag der Anmeldung: 06.04.2011
(73) Patentinhaber: Carl Zeiss Industrielle Messtechnik GmbH, 73447 Oberkochen (DE)
(72) Erfinder: ENDERLE, Eckhard, 73434 Aalen (DE); JENISCH, Walter, 89520 Heidenheim (DE); ENGEL, Thomas, 73432 Aalen (DE)
(74) Vertreter: Brunotte, Joachim Wilhelm Eberhard
(86) Internationale Anmeldenummer: PCT/EP2009/004024
(87) Internationale Veröffentlichungsnummer: WO 2009/152962

(56) Entgegenhaltungen:
- EP-A1- 1 659 363
- EP-A1- 1 696 289
- EP-A2- 1 126 237
- DE-A1- 19 648 864
- US-A- 3 030 135
- US-A- 5 430 948

## Beschreibung

Die Erfindung betrifft eine Halteeinrichtung zum Halten eines Kalibrierkörpers, der dazu dient, einen Messsensor eines Koordinatenmessgeräts zu kalibrieren. Die Erfindung betrifft ferner ein Verfahren zum Kalibrieren eines Messsensors eines Koordinatenmessgeräts.

Das Verfahren betrifft insbesondere denjenigen Teil der Kalibrierung eines Messsensors, der die Positionierung und/oder Ausrichtung des Kaübrierkörpers betrifft. Lediglich optional betrifft das Verfahren auch weitere Schritte der Kalibrierung, nämlich z. B. das Erfassen bzw. Aufnehmen von Messwerten von Oberflächenpunkten des Kalibrierkörpers durch den Messsensor und die Auswertung der Messwerte, um Kalibrierparameter zu erhalten. Diese Schritte sind an sich bekannt und werden hier nicht näher beschrieben.

Kalibrierkörper, insbesondere kugelförmige Kalibrierkörper, werden bekanntermaßen zum Kalibrieren von Messsensoren von Koordinatenmessgeräten (KMG) eingesetzt. Bei dem Messsensor kann es sich z. B. um einen tastenden Sensor handeln, der das jeweilige Messobjekt mechanisch antastet. Es kann sich bei dem Messsensor jedoch auch um einen anderen Messsensor handeln, z. B. einen das Messobjekt optisch abtastenden oder auf andere Weise berührungslos abtastenden Messsensor handeln. Gleichzeitig mit dem Messsensor können auch Teile des Koordinatenmessgeräts kalibriert werden, die für die Gewinnung korrekter Messwerte des Messsensors von Bedeutung sind. Z. B. kann ein Dreh-/Schwenkgelenk an einem Arm eines Koordinatenmessgeräts angeordnet sein und an dem Gelenk wiederum der Messsensor angeordnet sein. In diesem Fall können auch z. B. Kalibrierparameter des Dreh-/Schwenkgelenks gleichzeitig mit Kalibrierparametern des Messsensors kalibriert werden oder es können gemeinsame Kalibrierparameter des Messsensors und des Gelenks durch Kalibrierung ermittelt werden. Insbesondere kann z. B. eine 3 x 3- Matrix oder 4 x 4- Matrix durch Kalibrierung ermittelt werden, die die so genannte Übertragungsmatrix ist, mit der aus den Messsignalen des Messsensors die Koordinaten des momentan von dem Messsensor abgetasteten Oberflächenpunkts des Messobjekts berechnet werden können.

Es ist bekannt, einen Kalibrierkörper, insbesondere eine Kugel, an einer Halteeinrichtung zu befestigen, so dass die Halteeinrichtung den Kalibrierkörper hält. Z. B. ist eine solche Halteeinrichtung aus der EP 0 786 644 A2 bekannt. Die Halteeinrichtung weist einen zylindrischen Block auf, der entfernbar mit einem Maschinentisch verbunden werden kann, z. B. in dem er in seiner Basis einen Permanentmagneten aufweist. An der Spitze ist der Block unter einem Winkel (z. B. 45 Grad) abgeschnitten, so dass eine ebene Stirnfläche gebildet ist. Senkrecht zu der Stirnfläche ist ein Stab angeordnet, der an seinem freien Ende den Kalibrierkörper, eine Kalibrierkugel, trägt.

Die Erfindung betrifft insbesondere solche Halteeinrichtungen, die auf der in der Regel horizontal verlaufenden ebenen Oberfläche eines Messtischs angeordnet werden. Auf dem Messtisch wird bei Vermessung eines Messobjekts das Messobjekt angeordnet, entweder unmittelbar durch Auflegen auf den Messtisch oder es wird ein Halter auf den Messtisch gebracht, der das Messobjekt hält. Dementsprechend wird zum Kalibrieren des Messsensors die Halteeinrichtung, die den Kalibrierkörper hält, auf dem Messtisch angeordnet. Die senkrecht zu der Messtischoberfläche verlaufende Koordinatenachse wird üblicherweise als z-Achse bezeichnet. Sie verläuft in aller Regel in vertikaler Richtung.

Es ist bekannt, dass die Halteeinrichtung zum Halten des Kalibrierkörpers um eine senkrecht zu der Messtischoberfläche verlaufende Achse, also um eine in z-Richtung verlaufende Achse herum gedreht werden kann, um den Kalibrierkörper in einer für die Kalibrierung geeigneten Weise zu positionieren. Z. B. kann die Halteeinrichtung mittels einer Schraube in der gewünschten Position an der Messtischoberfläche festgeschraubt und dadurch fixiert werden.

Bei der Kalibrierung von Messsensoren treten jedoch Situationen auf, in denen Teile der für die Kalibrierung aufgebauten Messanordnung und/oder Teile des Koordinatenmessgeräts und/oder Teile des Messsensors eine Kalibrierung behindern. Die Konturen von störenden Teilen der Gesamtanordnung (d. h. der Messanordnung, des Koordinatenmessgeräts und des Messsensors) werden auch als Störkonturen bezeichnet. Zur Lösung dieses Problems können spezielle Anbauteile für die Halteeinrichtung gefertigt werden, so dass der Messsensor den Kalibrierkörper aus allen für die Kalibrierung erforderlichen Richtungen abtasten kann. Solche speziellen Anbauteile oder spezielle Ausführungsformen der Halteeinrichtung sind jedoch nur für bestimmte Gesamtanordnungen einsetzbar.

Insbesondere bei optischen Messsensoren, z. B. Linienscannern, kann ein Befestigungselement, über das der eigentliche Kalibrierkörper mit der Halteeinrichtung verbunden ist, zu Messfehlern bei der Kalibrierung führen. Insbesondere ist es üblich, den Kalibrierkörper über ein stabförmiges Befestigungselement mit der eigentlichen Halteeinrichtung zu verbinden. Wenn der optische Messsensor unter bestimmten Blickwinkeln auch den Stab detektiert, kann es zu einer fehlerhaften Kalibrierung kommen.

Ist der Messsensor über einen drehbaren Sensorträger (z. B. über das oben bereits erwähnte Dreh-/Schwenkgelenk) mit dem Koordinatenmessgerät verbunden, kann es vorteilhaft oder sogar notwendig sein, den Kalibrierkörper bei unterschiedlichen relativen Drehstellungen des Messsensors und des Koordinatenmessgeräts abzutasten. Bei bestimmten relativen Drehstellungen, oder allgemeiner formuliert bei bestimmten relativen Ausrichtungen des Messsensors und des KMG, können Störkonturen die Kalibrierung verhindern.

US 5,430,948 beschreibt eine Anordnung zum Zertifizieren eines Koordinatenmessgerätes. Die Anordnung weist eine Stange auf, die an ihren gegenüberliegenden Enden jeweils eine Kugel trägt. Eine Unterstützung unterstützt die Stange an ihrem Mittelpunkt zwischen den Kugeln. Eine erste Dreheinrichtung dient dazu, die Kugelunterstützung um eine horizontale Achse zu drehen und eine zweite Dreheinrichtung dient dazu, die Stangenunterstützung um eine vertikale Achse zu drehen. Insbesondere können durch Drehung der Stange um die horizontale Drehachse Stellungen der Stange eingestellt werden, bei der die Stange mit ihrer Längsachse um 45° gegen die Horizontale geneigt ist.

EP 1 126 237 A2 beschreibt einen Messaufbau, mit dem Korrekturparameter für die Laufabweichungen eines Drehgelenks bestimmt werden können. Dazu wird eine Dreh-Schwenkeinrichtung, die üblicherweise an einem Tastkopf eines Koordinatenmessgeräts betrieben wird, auf einem hochgenauen Koordinatenmessgerät aufgespannt und wird an der Dreh-Schwenkeinrichtung ein Kugelprüfkörper angebracht, der wenigstens drei Kugeln aufweist. Nunmehr wird das Drehgelenk in jeden seiner möglichen Drehwinkel gebracht und die jeweilige Lage der Kugeln mit einem Zentriertaster vermessen. Fig. 6 zeigt, dass eine Drehachse der Dreh-Schwenkeinrichtung vertikal orientiert ist und die andere Drehachse horizontal orientiert ist. Fig. 7 der Druckschrift zeigt eine Variante, bei der der Kugelprüfkörper über ein Winkelstück anders ausgerichtet an dem Drehgelenk mit der horizontalen Drehachse befestigt ist.

EP 1 696 289 A1 beschreibt ein Verfahren zum Vermessen einer programmgesteuerten Werkzeugmaschine unter Verwendung einer Messkugel. Das Positionieren der hinsichtlich ihrer Abmessungen vorbekannten Messkugel an einem ausgewählten Maschinenteil kann dadurch erfolgen, dass ein konstruktiv einfacher Halter, z.B. in Form eines Stabes an der Messkugel befestigt wird, und dieser Halter dann an dem Maschinenteil fixiert wird. Bei dem Maschinenteil kann es sich beispielsweise um einen Schwenk-Rundtisch handeln, wobei der Maschinenteil mit der daran fixierten Messkugel aus einer ersten Messstellung in eine zweite Messstellung um die gemeinsame Drehachse um einen vorbestimmten Winkel verschwenkt wird. Fig. 6 zeigt eine Ausführungsform eines solchen Schwenk-Rundtisches. In der gezeigten Schwenkstellung ist die in der Mitte des Rundtisches verlaufende Drehachse geneigt.

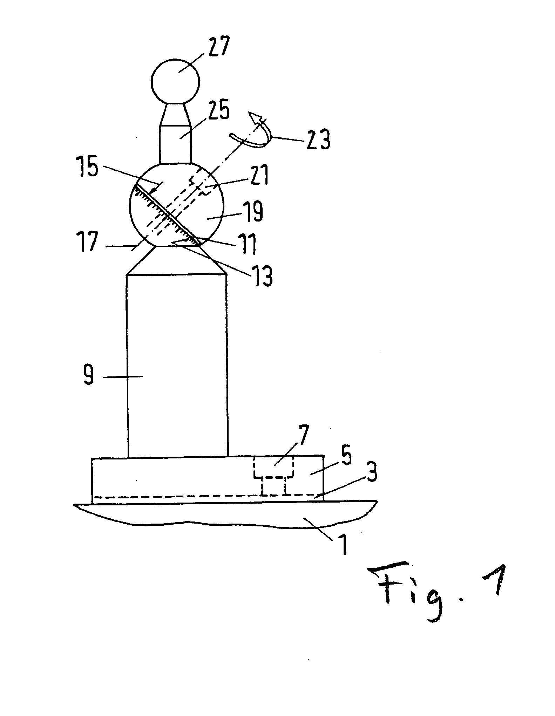

DE 196 48 864 A1 beschreibt die Positionierung von Vorrichtungen zur temporären Fixierung eines Werkstücks. Eine Positioniervorrichtung kann eine Justiervorrichtung aufweisen, welche an einer vorgegebenen Stelle auf einem Messmaschinentisch angeordnet werden kann. Auf dem Maschinentisch ist eine Basiseinheit der Justiereinrichtung fixiert, in der um 360° beweglich ein programmierbarer Schrittmotor angeordnet ist, der um einen vorgebbaren Winkel einstellbar ist. Dieser Drehkopf hält in einer Gabel an einem Gelenk einen weiteren Drehkopf mit integriertem programmierbarem Schrittmotor, der um den Drehzapfen um +/- 100° schwenkbar ist. Der Schrittmotor trägt auf seiner Kopfseite einen Magneten, mit dem ein Distanzstück magnetisch auf dem Justierkopf exakt fixiert wird. die Koppeleinrichtung von Fig. 1 keine solche Drehachse aufweist.

US 3,030,135 beschreibt einen Werkstückhalter, bei dem das Werkstück unter einem beliebigen Winkel positioniert und gehalten werden kann, zum präzisen Bohren, Schleifen oder dergleichen. Eine Basis des Halters weist einen sich aufwärts erstreckenden Bereich auf, der eine kugelförmig geformte Frontfläche aufweist, die der Kontur einer zugeordneten Halbkugel entspricht. Die Halbkugel ist innerhalb der durch die Frontfläche gebildeten Aufnahme beweglich, so dass eine Stirnseite der Halbkugel auf jeden Winkel zwischen 0° und 90° einstellbar ist. Eine Hülse in der Halbkugel nimmt einen elliptischen Kopf auf, der um eine Drehachse drehbar ist, die in Richtung der Stirnseite der Halbkugel orientiert ist.

EP 1 659 363 A1 offenbart einen Detektor-Tragmechanismus zum Tragen eines Detektors, der von einem Messgerät verwendet wird. Ein zweiter Arm, an dem der Detektor getragen wird, wird relativ zu einem ersten Arm, der an einer Montageeinheit befestigt ist, um einen Winkel von 180° um die Rotationsachse des zweiten Arms gedreht, wobei die Rotationsachse um einen Winkel von 45° in einer Richtung gegen die vertikale Richtung geneigt ist.

Es ist eine Aufgabe der vorliegenden Erfindung, eine Halteeinrichtung und ein Verfahren der zuvor genannten Art anzugeben, die das Abtasten eines Kalibrierkörpers in möglichst vielen verschiedenen Situationen unter Verwendung derselben Halteeinrichtung ermöglichen.

Die Aufgabe wird gelöst durch eine Halteeinrichtung zum Halten eines Kalibrierkörpers, der zum Kalibrieren eines Messsensors eines Koordinatenmessgeräts von dem Messsensor abzutasten ist, wobei die Halteeinrichtung eine Einstelleinrichtung aufweist, die ausgestaltet ist, durch Betätigung eines Benutzers eine Ausrichtung eines an der Halteeinrichtung gehaltenen Kalibrierkörpers einzustellen, die Einstelleinrichtung einen drehbaren Teil aufweist, der gegenüber einem anderen Teil der Einstelleinrichtung um eine erste Drehachse drehbar ist, wobei der Kalibrierkörper zu seiner Befestigung an der Halteeinrichtung mit dem drehbaren Teil verbunden wird, die Halteeinrichtung ein stabförmiges Befestigungselement aufweist, an dem der Kalibrierkörper zu befestigen ist, wobei das stabförmige Befestigungselement mit dem drehbaren Teil verbunden ist, um den Kalibrierkörper an der Halteeinrichtung zu befestigen, sodass eine Ausrichtung des Kalibrierkörpers durch die Ausrichtung der Längsachse des stabförmigen Befestigungselements definiert ist und sodass durch eine Drehung des drehbaren Teils der Halteeinrichtung um die erste Drehachse eine Ausrichtung des Kalibrierkörpers einstellbar ist, die Halteeinrichtung so ausgestaltet ist, dass zumindest ein Teil der Halteeinrichtung um eine zweite Drehachse, die die erste Drehachse unter einem Winkel schneidet oder windschief zu der ersten Drehachse verläuft, drehbar ist, sodass die Ausrichtung des Kalibrierkörpers durch Drehbewegungen um die erste und die zweite Drehachse einstellbar ist, bei entsprechender Anordnung der Halteeinrichtung, z. B. auf einem Messtisch, die zweite Drehachse in vertikaler Richtung verläuft und die erste Drehachse gegen die Vertikale geneigt ist.

Ein Grundgedanke der vorliegenden Erfindung besteht darin, es einem Benutzer zu ermöglichen, durch Betätigung der Halteeinrichtung eine Ausrichtung des an dem Halter gehaltenen Kalibrierkörpers einzustellen. Bei der Einstellung der Ausrichtung kann optional auch die Position des Kalibrierkörpers durch einen einzigen Bewegungsvorgang mitverändert werden.

Im Gegensatz zu der Einstellung der Drehstellung der Halteeinrichtung um eine in z-Richtung verlaufende Drehachse relativ zu einem Messtisch (wie oben beschrieben) wird unter einer Betätigung der Halteeinrichtung verstanden, dass verschiedene Teile der Halteeinrichtung eine Relativbewegung zueinander ausführen, so dass der Kalibrierkörper die gewünschte Ausrichtung und/oder Position erhält. Alternativ kann durch die Betätigung eine gegebene Beweglichkeit zwischen der Halteeinrichtung und dem Kalibrierkörper ausgenutzt werden. Es wird eine Halteeinrichtung zum Halten eines Kalibrierkörpers zum Kalibrieren eines Messsensors eines Koordinatenmessgeräts vorgeschlagen, wobei die Halteeinrichtung eine Einstelleinrichtung aufweist, die ausgestaltet ist durch Betätigung eines Benutzers eine Ausrichtung des an dem Halter gehaltenen Kalibrierkörpers einzustellen.

Grundsätzlich kann die Einstelleinrichtung einen eigenen Antrieb aufweisen oder der Benutzer bringt die für die Bewegung erforderliche Kraft selbst oder über Hilfsmittel auf. Im erstgenannten Fall weist die Halteeinrichtung z. B. einen integrierten Elektromotor auf oder ist der Halteeinrichtung ein Motor zugeordnet, der z. B. über ein Getriebe, Wellen oder andere Kraftübertragungsmittel die für die Bewegung erforderliche Kraft aufbringt.

Die zuvor genannte Aufgabe wird ferner gelöst durch ein Verfahren zum Kalibrieren eines Messsensors eines Koordinatenmessgeräts, wobei der Messsensor durch Erfassen von Messwerten, insbesondere Koordinaten von zumindest einem Punkt, eines Kalibrierkörpers zu kalibrieren ist und wobei das Verfahren folgende Schritte aufweist: Anordnen einer Halteeinrichtung zum Halten des Kalibrierkörpers in einem Messbereich, in dem der Messsensor die Messwerte erfassen kann, Befestigen des Kalibrierkörpers über ein stabförmiges Befestigungselement mit einem um eine erste Drehachse drehbaren Teil der Halteeinrichtung, sodass die Halteeinrichtung den Kalibrierkörper hält und sodass eine Ausrichtung des Kalibrierkörpers durch die Ausrichtung der Längsachse des stabförmigen Befestigungselements definiert ist, Anordnen der Halteeinrichtung, sodass die erste Drehachse gegen die Richtung einer zweiten Drehachse der Halteeinrichtung geneigt ist, wobei die zweite Drehachse die erste Drehachse schneidet, oder die erste Drehachse gegen eine Parallele der Richtung der zweiten Drehachse geneigt ist, wobei die zweite Drehachse windschief zu der ersten Drehachse verläuft, und Einstellen einer Ausrichtung des Kalibrierkörpers durch Drehen des drehbaren Teils der Halteeinrichtung um die erste Drehachse und Einstellen einer Ausrichtung des Kalibrierkörpers durch Drehen der Halteeinrichtung um die zweite Drehachse.

Die beiden zuerst genannten Schritte können gleichzeitig und/oder in beliebiger Reihenfolge nacheinander ausgeführt werden. Grundsätzlich kann der letzte Schritt auch bereits vor oder während den beiden ersten Schritten ausgeführt werden. Ist die Halteeinrichtung jedoch bereits in dem Messbereich positioniert, kann der dritte Schritt erstmalig oder wiederholt ausgeführt werden. Dadurch kann die Ausrichtung und optional auch die Position des Kalibrierkörpers in dem Messbereich auf einfache Weise verändert werden.

Unter einer Neigung gegen die Vertikale wird in besonderen Fällen, in denen die Halteeinrichtung nicht auf einem Messtisch mit horizontaler Oberfläche angeordnet ist, eine entsprechend anders ausgerichtete, ausgezeichnete Richtung der Messanordnung verstanden. Z. B. kann die Vertikale in diesem Fall, wenn die Oberfläche, auf der die Halteeinrichtung montiert wird, in einer vertikalen Ebene verläuft, eine Horizontale sein. "Vertikal" bezieht sich daher auf den üblichen Fall, dass die Halteeinrichtung auf einer horizontalen Messtischoberfläche angeordnet wird.

Die Einstelleinrichtung weist einen drehbaren Teil auf, der gegenüber einem anderen Teil der Einstelleinrichtung um eine erste Drehachse drehbar ist. Wenn der Kalibrierkörper von der Halteeinrichtung gehalten wird, ist er mit dem drehbaren Teil verbunden. Durch Drehung des drehbaren Teils wird daher auch der daran befestigte Kalibrierkörper gedreht und dadurch die Ausrichtung des Kalibrierkörpers im Messbereich verändert.

Da der Kalibrierkörper an einem stabförmigen Befestigungselement befestigt ist, welches mit der Halteeinrichtung verbunden wird, wird unter einer Ausrichtung des Kalibrierkörpers (insbesondere wenn dieser Kugelförmig ist) die Ausrichtung der Längsachse des stabförmigen Befestigungselements verstanden.

Der drehbare Teil der Einstelleinrichtung oder ein fest mit dem drehbaren Teil verbundener Teil der Halteeinrichtung kann eine Markierung aufweisen, deren Position und/oder Ausrichtung für einen zu kalibrierenden Messsensor detektierbar ist. Bezüglich einer entsprechenden Ausgestaltung des Verfahrens wird vorgeschlagen, dass der Messsensor zur Detektion der Ausrichtung und/oder Position des Kalibrierkörpers zumindest einen Bereich, insbesondere eine Markierung, eines drehbaren Teils und/oder eines fest mit dem drehbaren verbundenen Teil der Halteeinrichtung erfasst.

Dadurch wird insbesondere eine automatische Erkennung der momentanen Position und/oder Ausrichtung des Kalibrierkörpers möglich. Z. B. kann der drehbare Teil eine Bohrung aufweisen, deren Ausrichtung und/oder Position von dem Messsensor erfassbar ist. Dabei reicht in der Regel eine Erfassung ohne korrekte Kalibrierparameter aus, d. h. zu Beginn des Kalibriervorganges kann der Messsensor zunächst anhand der Markierung überprüfen, ob der Kalibrierkörper in der gewünschten Position und/oder Ausrichtung ist.

Zur automatischen Erkennung der momentanen Position und/oder Ausrichtung des Kalibrierkörpers kann alternativ oder zusätzlich zumindest ein Sensor mit der Halteeinrichtung kombiniert sein, der entsprechend der momentanen Position und/oder Ausrichtung ein Signal an eine Einrichtung ausgibt, z. B. an die Steuereinrichtung des Koordinatenmessgeräts. Insbesondere kann z. B. ein Neigungssensor vorgesehen sein, der eine eingestellte Neigung des Kalibrierkörpers relativ zu der Halteeinrichtung und/oder die Neigung eines Teils der Halteeinrichtung detektiert. Wenn sich, wie in dieser Beschreibung beschrieben, die Neigung und die Drehposition eines Teils der Halteeinrichtung entsprechen, kann der Sensor alternativ die Drehposition detektieren und kann daraus die Position und/oder Ausrichtung des Kalibrierkörpers ermittelt werden.

Insbesondere kann das Ergebnis der automatischen Erkennung in allen genannten Fällen oder anderen Fällen zu der Steuereinrichtung des Koordinatenmessgeräts übertragen werden oder von der Steuereinrichtung selbst ermittelt werden, sodass die Steuereinrichtung abhängig von dem Ergebnis die Kalibrierung des Messsensors mithilfe des Kalibrierkörpers steuern kann.

Ein Vorteil der automatischen Erkennung liegt auch darin, dass der Steuereinrichtung dann die Lage und Position der gesamten Halteeinrichtung (die sogenannte Störkontur) bekannt ist. Die Steuereinrichtung kann daher bestimmen, von welcher Seite der Kalibrierkörpers und bei welcher Ausrichtung des Messsensors (z. B. bei einem Messsensor mit einem Dreh-/Schwenkgelenk) angetastet werden kann.

Gemäß einer weiteren Ausgestaltung kann die Halteeinrichtung oder der Kalibrierkörpers selbst einen Datenspeicher (z. B. einen mikroelektronischen Speicherchip) aufweisen, in dem gespeichert ist, welcher oder welche (von einer Mehrzahl möglicher verschiedener) Kalibrierkörper momentanen von der Halteeinrichtung gehalten werden. Außerdem oder alternativ kann auch die automatisch ermittelte Position und/oder Ausrichtung des Kalibrierkörpers in den Datenspeicher abgespeichert werden. Z. B. können die in dem Datenspeicher gespeicherten Daten zu der Steuereinrichtung des Koordinatenmessgeräts übertragen werden und bei der Steuerung des Kalibriervorganges berücksichtigt werden.

Vorzugsweise jedoch wird zur Bestimmung der Position und/oder Ausrichtung des Kalibrierkörpers keine zusätzliche Markierung verwendet, sondern ein definierter Punkt oder eine Anordnung von definierten Punkten an oder in dem Kalibrierkörper, z. B. der Mittelpunkt der Kalibrierkugel. Als zweiter definierter Referenzpunkt dient z. B. ein ausgezeichneter Punkt der Halteeinrichtung, z. B. der Mittelpunkt einer Kugel, die durch den ersten und den zweiten Kugelelabschnitt gebildet wird. Durch einen Referenzpunkt an oder in dem Kalibrierkörper und einen weiteren Referenzpunkt an oder in der Halteeinrichtung kann die Ausrichtung und zusätzlich optional auch die Position des Kalibrierkörpers automatisch ermittelt werden.

Die Halteeinrichtung ist so ausgestaltet, dass zumindest ein Teil der Halteeinrichtung um eine zweite Drehachse, die die erste Drehachse unter einem Winkel schneidet oder windschief zu der ersten Drehachse verläuft, drehbar ist, so dass die Ausrichtung des Kalibrierkörpers durch Bewegungen um die erste und die zweite Drehachse einstellbar ist. Dabei kann die zweite Drehachse z. B. die oben beschriebene Drehachse sein, um die die gesamte Halteeinrichtung relativ zu dem Messtisch gedreht werden kann, also eine Drehachse in z-Richtung. Die Halteeinrichtung kann jedoch auch so ausgestaltet sein, dass durch relative Verdrehung von Teilen der Halteeinrichtung auch die Drehbarkeit um die zweite Drehachse gegeben ist.

Die zweite Drehachse ist vorzugsweise so ausgerichtet, dass sie um einen Winkel von 45 Grad gegen die Vertikale geneigt ist. Dies ermöglicht es, die Ausrichtung und/oder Position des Kalibrierkörpers über einen weiten möglichen Einstellbereich zu verändern.

Durch die Drehbarkeit um zwei Drehachsen, die nicht parallel zueinander verlaufen, sind erweiterte Möglichkeiten der Einstellung der Ausrichtung und/oder Position des Kalibrierkörpers möglich.

Auch dann, wenn lediglich die Einstellung der Ausrichtung des Kalibrierkörpers um die erste Drehachse möglich ist, und diese Drehachse gegen die Vertikale geneigt ist, bestehen weitgehende Freiheiten bei der Wahl der Ausrichtung und/oder Position des Kalibrierkörpers. Daher können viele verschiedene Gesamtanordnungen mit unterschiedlichen Störkonturen mit derselben Halteeinrichtung und daran montiertem Kalibrierkörper kalibriert werden.

In bevorzugter Ausgestaltung ist der drehbare Teil ein erster Kugelabschnitt, der um die erste Drehachse relativ zu dem anderen Teil der Einstelleinrichtung drehbar ist. Der andere Teil der Einstelleinrichtung kann z. B. ein zweiter Kugelabschnitt sein, wobei der erste Kugelabschnitt und der zweite Kugelabschnitt gemeinsam eine Kugel bilden. Wenn im Folgenden von einer Kugeloberfläche die Rede ist, kann sich dies allein auf den ersten Kugelabschnitt beziehen, d. h. auf den von dem ersten Kugelabschnitt gebildeten Teil einer Kugeloberfläche. Sowohl unter einem Kugelabschnitt als auch unter einer Kugel wird in diesem Zusammenhang jedoch auch verstanden, dass der Abschnitt bzw. die Kugel Aussparungen (z. B. Gewindebohrungen und andere Bohrungen) oder fest mit dem Abschnitt oder der Kugel verbundene Elemente aufweisen kann, so dass die Idealform eines Kugelabschnitts oder einer Kugel modifiziert ist. Insbesondere wird über ein in dem ersten Kugelabschnitt ausgeformtes Innengewinde die Befestigungsverbindung zu dem Kalibrierkörper hergestellt, z. B. in dem das bereits erwähnte stabförmige Befestigungselement in die Gewindebohrung in dem ersten Kugelabschnitt eingeschraubt wird.

Die in dem vorangegangen Absatz genannten Merkmale können auch bei einem anders gestalteten drehbaren Teil vorhanden sein. Z. B. kann der drehbare Teil ein Polyeder sein und/oder kann der drehbare Teil gemeinsam mit dem anderen Teil der Einstelleinrichtung einen Polyeder bilden.

Die durch den ersten Kugelabschnitt gebildete Kugeloberfläche hat den Vorteil, dass sie das Abtasten des Kalibrierkörpers nicht oder nur sehr geringfügig behindert, wenn der Kalibrierkörper über die Kugeloberfläche mit der Halteeinrichtung verbunden ist. Außerdem kann die Kugeloberfläche eine Mehrzahl von Befestigungseinrichtungen aufweisen, die es erlauben, den Kalibrierkörper wahlweise an unterschiedlichen Positionen und/oder mit unterschiedlicher Ausrichtung an der Kugeloberfläche des Kugelabschnitts zu befestigen oder eine Mehrzahl von Kalibrierkörpern gleichzeitig an unterschiedlichen Stellen der Kugeloberfläche zu befestigen.

Vorzugsweise verläuft die erste Drehachse senkrecht zu einer Kreisfläche, die die Grenzfläche des ersten Kugelabschnitts bildet. Z. B. geht der erste Kugelabschnitt an der Kreisfläche in den zweiten Kugelabschnitt über, mit dem zusammen der erste Kugelabschnitt eine gemeinsame Kugeloberfläche bildet. Somit steht die erste Drehachse auch senkrecht zu der Kugeloberfläche, die durch den ersten Kugelabschnitt definiert wird. Daher kann durch Drehung des ersten Kugelabschnitts um die erste Drehachse eine Drehung von Oberflächenbereichen der Kugeloberfläche erreicht werden. Wenn an diesen Oberflächenbereichen die Verbindung zwischen Halteeinrichtung und Kalibrierkörper angeordnet ist, bewirkt die Drehung des ersten Kugelabschnitts eine entsprechende Drehung des Kalibrierkörpers in einem Raumgebiet, welches durch eine Kegeloberfläche ergänzt ist.

Der drehbare Teil der Einstelleinrichtung, insbesondere der erste Kugelabschnitt ist vorzugsweise zumindest in einer Drehposition fixierbar. Er kann daher nicht unbeabsichtigt die fixierte Drehposition verlassen. Z. B. kann zur Fixierung der Drehposition eine Schraube verwendet werden, die beispielsweise durch eine durch den drehbaren Teil verlaufende Durchgangsbohrung bis in eine Gewindebohrung in dem anderen Teil der Einstelleinrichtung verläuft. Durch Festschrauben der Schraube wird der drehbare Teil an dem anderen festgeklemmt, d. h. kraftschlüssig verbunden.

Allgemeiner formuliert kann der erste Kugelabschnitt oder noch allgemeiner formuliert der drehbare Teil der Einstelleinrichtung eine in Richtung der ersten Drehachse verlaufende Ausnehmung aufweisen, in der ein Fixierungselement zur Fixierung einer eingestellten Drehposition des drehbaren Teils angeordnet ist.

Die Einstelleinrichtung kann so ausgestaltet sein, dass der drehbare Teil, insbesondere der erste Kugelabschnitt in einer Mehrzahl diskreter Drehstellungen relativ zu dem anderen Teil der Einstelleinrichtung fixierbar ist. Auf diese Weise kann eine Art Rasterung erzielt werden, die es ermöglicht, eine bestimmte Drehstellung oder mehrere bestimmte Drehstellungen später wieder zu reproduzieren. Auf ein Ausführungsbeispiel wird noch in der Figurenbeschreibung eingegangen. Z. B. ist eine Dreipunktlagerung möglich, wobei der drehbare Teil und der andere Teil der Einstelleinrichtung die Dreipunktlagerung bilden, bei der drei vorgegebene Punkte des drehbaren Teils an diskreten, vorgegebenen Positionen des anderen Teils positionierbar und fixierbar sind. Die drei vorgegebenen Punkte liegen insbesondere in einer Ebene, zu der die erste Drehachse senkrecht verläuft.

Eine reproduzierbare Einstellung einer Drehposition hat insbesondere den Vorteil, dass der Kalibrierkörper ausgetauscht werden kann und auch erneut wieder derselbe Kalibrierkörper an der Halteeinrichtung angeordnet werden kann, wobei wieder dieselbe Drehposition eingestellt werden kann. Entsprechendes gilt, wenn Teile der Halteeinrichtung ausgetauscht werden, z. B. der drehbare Teil der Einstelleinrichtung. In diesem Fall ist es von besonderem Vorteil, wenn die Einstelleinrichtung eine Dreipunktlagerung des drehbaren Teils vorsieht.

In jedem Fall kann durch eine Fixierung eine Sicherung der momentanen Drehposition erfolgen. Ist der drehbare Teil wie oben beschrieben der erste Kugelabschnitt, hat dies den Vorteil einer hohen und weitgehend symmetrischen Biegesteifigkeit der Einstelleinrichtung. Eine solche hohe Biegesteifigkeit ist für eine präzise Kalibrierung von Vorteil.

Auch eine Basis der Halteeinrichtung, die z. B. mit einem Messtisch verbunden werden kann, weist vorzugsweise eine Klemmeinrichtung zum Festklemmen auf dem Messtisch auf. Z. B. weist die Basis einen plattenförmigen Bereich auf, der sich im montierten Zustand parallel zu der Messtischoberfläche erstreckt. Eine Durchgangsbohrung durch den plattenförmigen Bereich ermöglicht es, die Basis an der Messtischoberfläche festzuschrauben. Hierzu erstreckt sich der Schraubenschaft durch die Durchgangsbohrung hindurch in eine Gewindebohrung in dem Messtisch.

Unabhängig davon, ob der drehbare Teil der Einstelleinrichtung ein Kugelabschnitt ist, kann die Halteeinrichtung eine Befestigungseinrichtung oder eine Mehrzahl von Befestigungseinrichtungen aufweisen, die es erlaubt bzw. die es erlauben, den Kalibrierkörper wahlweise an unterschiedlichen Positionen und/oder mit unterschiedlicher Ausrichtung an der Halteeinrichtung zu befestigen oder eine Mehrzahl von Kalibrierkörpern gleichzeitig an unterschiedlichen Stellen der Halteeinrichtung zu befestigen. Mehrere Kalibrierkörper haben den Vorteil, dass zur Kalibrierung z. B. einer der Kalibrierkörper, der besonders gut abgetastet werden kann, verwendet wird.

Insbesondere wenn eine Mehrzahl von Befestigungseinrichtungen vorgesehen ist, aber auch in anderen Fällen, kann der drehbare Teil der Einstelleinrichtung eine Befestigungseinrichtung zur Befestigung eines Kalibrierkörpers aufweisen, sodass der befestigte Kalibrierkörper bei Drehung des drehbaren Teils um die Drehachse seine Position nicht ändert, d.h. die Drehung des drehbaren Teils kann zwar zu einer Drehung des Kalibrierkörpers führen, aber die Position des Kalibrierkörpers ändert sich nicht. Z. B. bleibt in diesem Fall bei einem kugelförmigen Kalibrierkörper das Zentrum der Kugel unverändert an demselben Ort. Eine solche Befestigungseinrichtung weist z. B. ein in der Richtung der Drehachse verlaufendes Gewinde auf. Somit ist es möglich, bei einer Mehrzahl der Kalibrierkörper, die über verschiedene Befestigungseinrichtungen mit dem drehbaren Teil verbunden sind, durch Drehung des drehbaren Teils um die Drehachse die Position zumindest eines der Kalibrierkörper zu verändern und die Position eines anderen Kalibrierkörpers nicht zu verändern.

Alternativ oder zusätzlich ist es möglich, einen Kalibrierkörper mit einem feststehenden Teil der Halteeinrichtung zu verbinden, sodass dieser Kalibrierkörper bei Drehung des drehbaren Teils nicht bewegt wird.

Bei einer bevorzugten Ausgestaltung ist die Einstelleinrichtung mit einer Anzeigeeinrichtung kombiniert, die ausgestaltet ist, einen momentanen Zustand der Einstelleinrichtung anzuzeigen, insbesondere eine Drehposition des drehbaren Teils der Einstelleinrichtung. Z. B. kann der Drehwinkel angezeigt werden. Bevorzugtermaßen ist die Anzeigeeinrichtung durch Markierungen, Skalen und/oder andere optisch erkennbar und einen bestimmten lokalen Bereich kennzeichnende Merkmal realisiert, die es dem Benutzer oder automatischen Erfassungseinrichtungen ermöglichen, die momentan eingestellte Drehposition des drehbaren Teils zu erkennen. Im Fall des ersten Kugelabschnitts als drehbarem Teil befindet sich z. B. umlaufend oder teilweise umlaufend am kreisförmigen Rand des Kugelabschnitts eine Skalierung und/oder zumindest eine Markierung. Um an der Skalierung einen Wert zu kennzeichnen oder mithilfe der an dem ersten Kugelabschnitt angebrachten mindestens einen Markierung einen Wert der Drehposition ablesen zu können, ist z. B. an dem als zweiten Kugelabschnitt ausgebildeten anderen Teil der Einstelleinrichtung zumindest eine Markierung oder eine Skalierung angebracht.

Im Fall von optisch messenden Messsensoren wird es bevorzugt, dass zumindest ein Teil der Oberfläche der Halteeinrichtung einen (für die von dem Messsensor verwendete Strahlung) hohen Absorptionsgrad von z. B. mindestens 0,8 hat, um Reflexionen der Strahlung bei der Abtastung zu reduzieren oder zu vermeiden. Alternativ oder zusätzlich ist die Oberfläche oder der Teil der Oberfläche matt für die Strahlung des Messsensors, d.h. die Oberfläche streut die Strahlung und reflektiert sie nicht spiegelnd. Vorzugsweise ist die gesamte Oberfläche der Halteeinrichtung so ausgestaltet, oder zumindest die Oberfläche der Einstelleinrichtung. Eine entsprechend gestaltete Oberfläche wird auch für das Befestigungselement bevorzugt, über welches der Kalibrierkörper mit der Halteeinrichtung verbunden ist.

In diesem Zusammenhang ist ein weiterer Vorteil der erfindungsgemäßen Halteeinrichtung zu nennen: Der Kalibrierkörper selbst kann eine für die Messstrahlung absorbierende oder streuende Oberfläche haben. Wenn der Kalibrierkörper aber sowohl für die Kalibrierung von optischen Sensoren als auch für die Kalibrierung von tastenden Sensoren verwendet wird, kann die Oberfläche beim Antasten verändert werden, sodass sie spiegelnd reflektiert. Die erfindungsgemäße Halteeinrichtung erlaubt es den Kalibrierkörper auf einfache Weise auszuwechseln.

Die oben erwähnten Markierungen, z. B. eine Bohrung in dem drehbaren Teil der Einstelleinrichtung kann alternativ oder zusätzlich zu der Erkennung der Position und/oder Ausrichtung des drehbaren Teils bzw. des Kalibrierkörpers dazu verwendet werden, zusätzliche Parameter bei Kalibrierung des Messsensors und/oder des Koordinatenmessgeräts zu gewinnen. Z. B. kann es sich dabei um Korrekturparameter handeln, mit denen Parameter des Messsensors und/oder des Koordinatenmessgeräts korrigiert werden können. Z. B. tastet der tastende Messsensor die Wandfläche der Bohrung an und wird der Messsensor dabei in verschiedene Richtungen relativ zu seiner Halterung ausgelenkt. Daraus werden die Korrekturparameter ermittelt. Besonders gut geeignet ist eine kegelförmige Bohrung, da hiermit so genannte selbst zentrierende Antastungen der Wandfläche möglich sind.

Wenn eine Mehrzahl von Kalibrierkörpern gleichzeitig an der Halteeinrichtung angeordnet ist, kann es sich dabei um jeweils zumindest einen Kalibrierkörper für unterschiedlich funktionierende Messsensoren handeln, z. B. für mechanisch antastende Messsensoren, optische Sensoren und kapazitive Sensoren.

Grundsätzlich kann die Halteeinrichtung auch dazu dienen, ein Messobjekt anstelle oder zusätzlich zu dem Kalibrierkörper zu halten. In diesem Fall dient die Vermessung des Messobjekts durch den Messsensor nicht der Kalibrierung des Messsensors oder des Koordinatenmessgeräts, sondern der Bestimmung von Koordinaten der Oberflächenpunkte des Messobjekts. Auch eine Vermessung des Kalibrierkörpers oder des Messobjekts mittels invasiver Strahlung ist möglich, z. B. mittels Röntgenstrahlung.

Eine andere Art der Fixierung des drehbaren Teils in einer bestimmten Drehposition ist die Möglichkeit, Magnetkräfte zu nutzen. Dabei ist die Magneteinrichtung z. B. so ausgestaltet, dass die Magnetkraft den drehbaren Teil in Richtung des anderen Teils der Einstelleinrichtung zieht. Dabei kann eine Veränderung der Drehposition des drehbaren Teils (z. B. im Fall der genannten Rasterung) nur dadurch möglich sein, dass eine Kraft gegen die Magnetkraft ausgeübt wird, um den drehbaren Teil in Richtung der ersten Drehachse von dem anderen Teil der Einstelleinrichtung zu bewegen, um ihn erst dann verdrehen zu können. Auch andere Arten der Fixierung sind möglich.

Ausführungsbeispiele der Erfindung werden nun unter Bezugnahme auf die beigefügte Zeichnung beschrieben. Die einzelnen Figuren der Zeichnung zeigen:
- Fig. 1:: eine besonders bevorzugte Ausführungsform der Halteeinrichtung mit einer daran befestigten Kalibrierkugel in einer ersten Drehposition,
- Fig. 2:: die Anordnung gemäß Fig. 1, wobei eine andere Drehposition eingestellt ist,
- Fig. 3:: einen Schnitt durch die Einstelleinrichtung zur Einstellung der Drehposition der Halteeinrichtung gemäß Fig. 1 und Fig. 2 und
- Fig. 4:: eine Draufsicht auf einen Teil einer Einstelleinrichtung zur Einstellung der Drehposition gemäß einer weiteren Ausführungsform.

Fig. 1 zeigt eine Halteeinrichtung, die auf einem Messtisch 1 angeordnet ist. Eine Basis 5 der Halteeinrichtung, die plattenförmig ausgestaltet ist und die an ihrer unteren, zur Messtischoberfläche weisenden Seite eine Hinterdrehung 3 aufweist, ist mit einer vertikalen Durchgangsbohrung 7 versehen, um die Basis 5 an der Messtischoberfläche festschrauben zu können. An der Oberseite der Basis 5 erstreckt sich ein säulenartiger Schaft 9 in vertikaler Richtung nach oben. Der Schaft 9 ist fest mit der Basis 5 verbunden. An seinem oberen Ende verjüngt sich der Schaft 9. Mit diesem verjüngten Bereich ist ein zweiter Kugelabschnitt 11 fest verbunden. Der zweite Kugelabschnitt 11 weist einen kreisförmigen Rand auf. Seine Symmetrieachse, die eine Achse entlang einer Durchmesserlinie der durch den zweiten Kugelabschnitt 11 gebildeten Kugel ist, ist unter einem Winkel, der im Bereich zwischen 30 und 60 Grad liegt und vorzugsweise im Bereich von 40 bis 50 Grad liegt, besonders bevorzugt 45 Grad beträgt, gegen die Vertikale geneigt.

Mit dem zweiten Kugelabschnitt 11 ist ein erster Kugelabschnitt 19 kombiniert, der gemeinsam mit dem zweiten Kugelabschnitt 11 eine Kugel definiert. Der erste Kugelabschnitt 19 ist um eine Drehachse 17 drehbar (wie es Pfeil 23 andeutet), wobei die Drehachse 17 die erste Drehachse ist und mit der Symmetrieachse des ersten Kugelabschnitts 19 und des zweiten Kugelabschnitts 17 zusammenfällt. Wenn hier von einer Symmetrieachse die Rede ist, so bezieht sich dies auf die Kugel-Grundform. Diese Kugel-Grundform kann jedoch durch Bohrungen, andere Ausnehmungen und/oder an der Kugel befestigte Gegenstände verändert sein. Insbesondere verläuft in der Richtung der Drehachse 17 eine Durchgangsbohrung 21, die an ihrem in dem zweiten Kugelabschnitt 11 liegenden Ende als Gewindebohrung ausgestaltet ist, so dass der erste Kugelabschnitt 19 mittels einer in die Bohrung 21 eingeschraubten Feststellschraube in seiner momentanen Drehstellung fixiert werden kann. Um die Drehstellung zu verändern, wird die Schraube gelöst, die Drehstellung verändert und die Schraube dann wieder festgezogen, so dass die neue Drehstellung fixiert ist.

Die in Fig. 1 dargestellte Drehstellung ist durch einen an dem ersten Kugelabschnitt 19 angebrachten Pfeil 15 ablesbar. Der Pfeil 15 weist mit seiner Spitze auf den kreisförmigen Rand des ersten Kugelabschnitts 19. Der gegenüberstehende kreisförmige Rand des zweiten Kugelabschnitts 11 weist eine Skalierung 13 auf, die auch (nicht dargestellt) mit Zahlen versehen sein kann. Z. B. können die Gradzahlen der Drehstellung von 0 bis 360 Grad oder z. B. von 0 bis 270 Grad an der Skala 13 aufgetragen sein.

In der in Fig. 1 dargestellten Drehstellung des ersten Kugelabschnitts 19 ragt ein stabförmiges Befestigungselement 25 in vertikaler Richtung nach oben auf. Dieses Befestigungselement 25 ist in eine Gewindebohrung in dem ersten Kugelabschnitt 19 eingeschraubt und festgeschraubt. An seinem freien, in Fig. 1 oben liegenden Ende, das gegenüber dem unteren Bereich des Befestigungselements 25 verjüngt ist, ist eine Kalibrierkugel 27 befestigt, welche zur Kalibrierung eines Messsensors von dem Messsensor abgetastet werden kann.

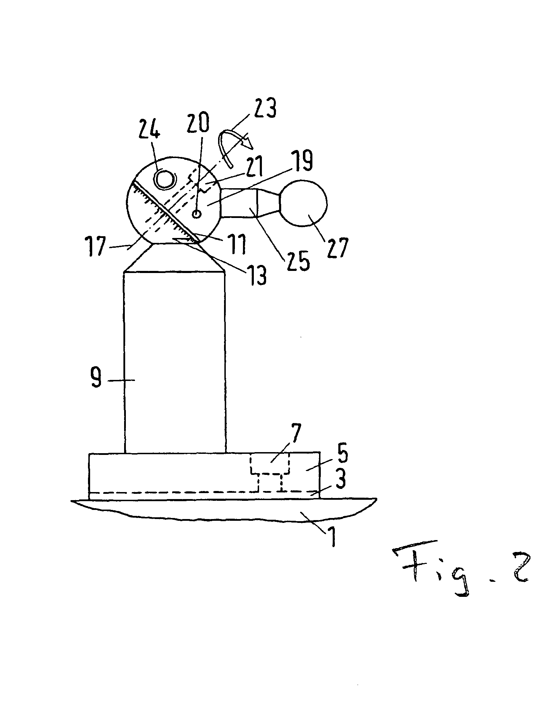

Durch Verdrehen des ersten Kugelabschnitts 19 um 180 Grad um die Drehachse 17 wird die in Fig. 2 gezeigte Drehstellung erreicht. Der Pfeil 15 ist in Fig. 2 nicht erkennbar, da er auf der Rückseite des ersten Kugelabschnitts 19 liegt. Wie der Pfeil 23 zeigt, könnte die in Fig. 1 dargestellte Drehstellung durch Zurückdrehen wieder erreicht werden.

Da die Drehachse 17 in dem Ausführungsbeispiel um 45 Grad gegen die Vertikale geneigt ist, erstreckt sich das Befestigungselement 25 mit seiner Längsachse in der in Fig. 2 dargestellte Drehstellung in horizontaler Richtung und befindet sich die Kalibrierkugel 27 daher rechts von der durch den Kugelabschnitt 11 und den Kugelabschnitt 19 gebildeten Kugel. Dabei schneidet die Verlängerung der Längsachse des Befestigungselements 25 wie auch in der in Fig. 1 dargestellten Situation den Kugelmittelpunkt der Kugel 11, 19.

Fig. 2 zeigt eine weitere Gewindebohrung 24 in dem ersten Kugelabschnitt 19. Ein weiterer Kalibrierkörper oder die Kalibrierkugel 27 kann mithilfe dieser Gewindebohrung 24 an dem ersten Kugelabschnitt 19 befestigt werden. Würde die Kalibrierkugel 27 mit ihrem Befestigungselement 25 in die Gewindebohrung 24 eingeschraubt, ergäben sich andere Einstellmöglichkeiten. Die Längsachse des Befestigungselements 25 würde die erste Drehachse 17 unter einem anderen Winkel als 45 Grad schneiden, nämlich unter einem Winkel, der etwa im Bereich von 60 bis 70 Grad liegt. Daher würde je nach Drehstellung des ersten Kugelabschnitts 19 relativ zu dem zweiten Kugelabschnitt 11 eine andere Ausrichtung der Längsachse des Befestigungselements 25 relativ zu der Vertikalen eingestellt sein, als es bei der in Fig. 1 und Fig. 2 dargestellten Anordnung der Fall ist. Insbesondere könnte sich das Befestigungselement 25 ausgehend von dem ersten Kugelabschnitt 19 in Richtung der Kalibrierkugel 27 auch leicht nach unten erstrecken.

Außerdem zeigt Fig. 2 eine Bohrung 20, die sich (wie auch die Gewindebohrung 24) in Richtung des Mittelpunkts der Kugel 11, 19 erstreckt. Diese Bohrung 20 dient als Markierung zu einem der oben bereits erläuterten Zwecke. Z. B. kann die Bohrung 20 kegelförmig sein.

Eine weitere Möglichkeit der Verdrehung und damit Einstellung der Ausrichtung des Befestigungselements 25 und der Kalibrierkugel 27 ist durch Lösen der Schraube möglich, mit der die Basis 5 an den Messtisch 1 festgeschraubt ist, durch Verdrehen der Halteeinrichtung um die Vertikale, die die Längsachse der Gewindebohrung 7 definiert und anschließendes Festschrauben der Schraube. Insgesamt bieten sich daher zahlreiche Möglichkeiten der Positionierung und Ausrichtung der Kalibrierkugel 27.

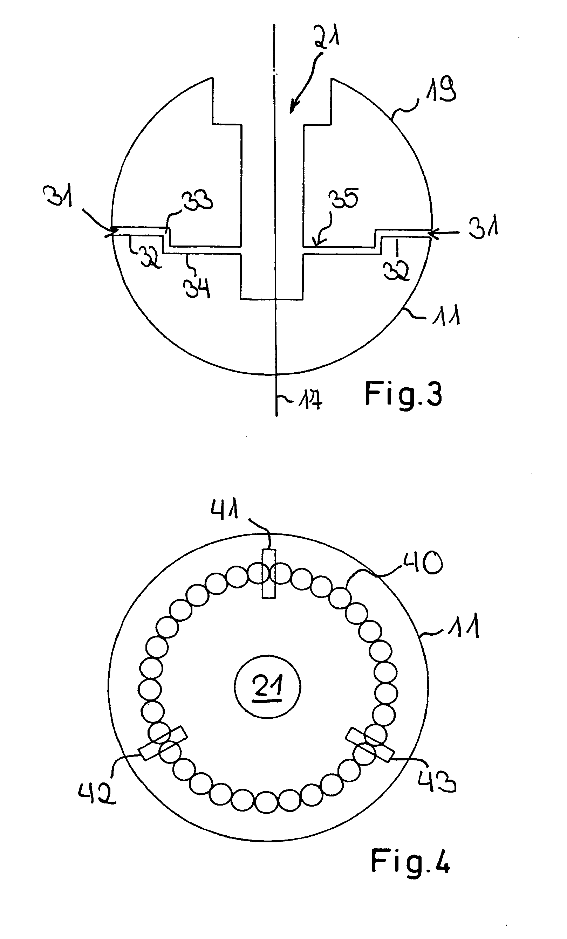

Eine erste Ausführungsform der durch die Kugelabschnitte 11, 19 gebildeten Einstelleinrichtung ist in der Schnittdarstellung von Fig. 3 erkennbar. Die Drehachse 17 erstreckt sich in der Darstellung von Fig. 3 senkrecht und zentral durch die Gewindebohrung 7. Der zweite Kugelabschnitt 11 weist auf Höhe der gemeinsamen kreisförmigen Randlinie 31 der Kugelabschnitte 11, 12 einen kreisringförmigen, zum ersten Kugelabschnitt 19 weisenden Oberflächenbereich 32 auf, der in Richtung der Drehachse 17 an einem zu der Drehachse 17 koaxialen Kreis 33 nach unten zurück springt. In Richtung der Drehachse 17 wird die Oberfläche bis zum Erreichen des Randes der Bohrung 21 wiederum durch eine Ebene, kreisringförmige Fläche 34 gebildet.

Die zu dem zweiten Kugelabschnitt 11 weisende Oberfläche des ersten Kugelabschnitts 19 ist komplementär zu der Oberfläche des zweiten Kugelabschnitts 11 geformt, so dass der erste Kugelabschnitt 19 einen Vorsprung 35 bildet, der in radialer Richtung gesehen innerhalb der Kreislinie 33 liegt. Durch Lösen der in Fig. 3 nicht dargestellten Schrauben innerhalb der Bohrung 21 kann daher die Klemmung der Kugelabschnitte 11, 19 aneinander gelöst werden, kann der erste Kugelabschnitt 19 verdreht werden und kann die erreichte Drehposition durch Festdrehen der Schraube wieder fixiert werden.

Eine andere Ausgestaltung der Einstelleinrichtung zeigt Fig. 4, die eine Ansicht eines der beiden Kugelabschnitte 11, 19, z. B. des zweiten Kugelabschnitts 11 in Richtung der Längsachse der Bohrung 21 zeigt. An dem in Fig. 4 dargestellten Kugelabschnitt befinden sich auf einem koaxial zu der Drehachse 17 verlaufenden Kreis eine Vielzahl von gleichgroßen Kugeln, die teilweise in das Material des Kugelabschnitts eingelassen sind. Hierdurch ist eine Teilung oder Rasterung gebildet, die eine Mehrzahl von vorgegebenen diskreten Drehstellungen der beiden Kugelabschnitte 11, 19 relativ zueinander ermöglicht. Z. B. weist der andere, nicht in Fig. 4 dargestellte Kugelabschnitt in einem Winkelabstand von 120 Grad um die Drehachse 17 angeordnete Zylinder 41, 42, 43 auf, die in eingerasteter Drehposition jeweils zwischen zwei benachbarten Kugeln liegen. Die Zylinderachsen sind auf die Drehachse 17 ausgerichtet und liegen in einer Ebene, zu der die Drehachse 17 senkrecht verläuft. Auf diese Weise ist eine Dreipunktlagerung realisiert.

## Patentansprüche

1. Halteeinrichturig zum Halten eines Kalibrierkörpers (27), der zum Kalibrieren eines Messsensors eines Koordinatenmessgeräts von dem Messsensor abzutasten ist, wobei
• die Halteeinrichtung eine Einstelleinrichtung (11, 19) aufweist, die ausgestaltet ist, durch Betätigung eines Benutzers eine Ausrichtung eines an der Halteeinrichtung gehaltenen Kalibrierkörpers (27) einzustellen,
• die Einstelleinrichtung (11, 19) einen drehbaren Teil (19) aufweist, der gegenüber einem anderen Teil (11) der Einstelleinrichtung (11, 19) um eine erste Drehachse (17) drehbar ist, wobei der Kalibrierkörper (27) zu seiner Befestigung an der Halteeinrichtung mit dem drehbaren Teil (19) verbunden wird,
• die Halteeinrichtung ein stabförmiges Befestigungselement (25) aufweist, an dem der Kalibrierkörper (27) zu befestigen ist, wobei das stabförmige Befestigungselement (25) mit dem drehbaren Teil (19) verbunden ist, um den Kalibrierkörper (27) an der Halteeinrichtung zu befestigen, sodass eine Ausrichtung des Kalibrierkörpers (27) durch die Ausrichtung der Längsachse des stabförmigen Befestigungselements (25) definiert ist und sodass durch eine Drehung des drehbaren Teils (19) der Halteeinrichtung um die erste Drehachse (17) eine Ausrichtung des Kalibrierkörpers (27) einstellbar ist,
• die Halteeinrichtung so ausgestaltet ist, dass zumindest ein Teil (5) der Halteeinrichtung um eine zweite Drehachse, die die erste Drehachse (17) unter einem Winkel schneidet oder windschief zu der ersten Drehachse (17) verläuft, drehbar ist, sodass die Ausrichtung des Kalibrierkörpers (27) durch Drehbewegungen um die erste (17) und die zweite Drehachse einstellbar ist,
• bei entsprechender Anordnung der Halteeinrichtung, z. B. auf einem Messtisch, die zweite Drehachse in vertikaler Richtung verläuft und die erste Drehachse (17) gegen die Vertikale geneigt ist.

2. Einrichtung nach dem vorhergehenden Anspruch, wobei der drehbare Teil (19) oder ein fest mit dem drehbaren Teil verbundener Teil eine Markierung (20) aufweist, deren Position und/oder Ausrichtung für einen zu kalibrierenden Messsensor detektierbar ist.

3. Einrichtung nach einem der vorhergehenden Ansprüche, wobei die erste Drehachse (17) bei entsprechender Anordnung der Halteeinrichtung, z. B. auf einem Messtisch, wenn die zweite Drehachse in vertikaler Richtung verläuft, unter einem Winkel gegen die Vertikale geneigt ist, der im Bereich von 30 bis 60 Grad liegt und insbesondere 45 Grad beträgt.

4. Einrichtung nach einem der vorhergehenden Ansprüche, wobei der drehbare Teil (19) ein erster Kugelabschnitt ist, der um die erste Drehachse (17) relativ zu dem anderen Teil (11) der Einstelleinrichtung (11, 19) drehbar ist.

5. Einrichtung nach dem vorhergehenden Anspruch, wobei der erste Kugelabschnitt (19) eine Befestigungseinrichtung oder eine Mehrzahl von Befestigungseinrichtungen (24) aufweist, die es erlaubt bzw. die es erlauben, den Kalibrierkörper (27) wahlweise an unterschiedlichen Positionen und/oder mit unterschiedlicher Ausrichtung an der Kugeloberfläche des Kugelabschnitts (19) zu befestigen oder eine Mehrzahl von Kalibrierkörpern gleichzeitig an unterschiedlichen Stellen der Kugeloberfläche zu befestigen.

6. Einrichtung nach einem der beiden vorhergehenden Ansprüche, wobei die erste Drehachse (17) senkrecht zu einer Kreisfläche verläuft, wobei die Kreisfläche eine Grenzfläche des ersten Kugelabschnitts (19) ist.

7. Einrichtung nach dem vorhergehenden Anspruch, wobei der erste Kugelabschnitt (19) eine in Richtung der ersten Drehachse (17) verlaufende Ausnehmung (21) aufweist, in der ein Fixierungselement angeordnet ist, mit dem der erste Kugelabschnitt (19) in einer eingestellten Drehstellung des ersten Kugelabschnitts (19) fixierbar ist.

8. Einrichtung nach einem der vorhergehenden Ansprüche, wobei der drehbare Teil (19) der Einstelleinrichtung (11, 19) in einer Mehrzahl diskreter Drehstellungen relativ zu dem anderen Teil der Einstelleinrichtung (11, 19) fixierbar ist.

9. Einrichtung nach dem vorhergehenden Anspruch, wobei der drehbare Teil (19) und der andere Teil (11) der Einstelleinrichtung (11, 19) eine Dreipunktlagerung (40, 41, 42, 43) des drehbaren Teils (19) bilden, bei der drei vorgegebene Punkte des drehbaren Teils (19) an diskreten, vorgegebenen Positionen des anderen Teils (11) positionierbar und fixierbar sind.

10. Einrichtung nach einem der vorhergehenden Ansprüche, wobei die Einstelleinrichtung (11, 19) mit einer Anzeigeeinrichtung (13, 15) kombiniert ist, die ausgestaltet ist, einen momentanen Zustand der Einstelleinrichtung (11, 19) anzuzeigen.

11. Verfahren zum Kalibrieren eines Messsensors eines Koordinatenmessgeräts, wobei der Messsensor durch Erfassen von Messwerten, insbesondere Koordinaten von zumindest einem Punkt, eines Kalibrierkörpers (27) zu kalibrieren ist und wobei das Verfahren folgende Schritte aufweist:
• Anordnen einer Halteeinrichtung zum Halten des Kalibrierkörpers (27) in einem Messbereich, in dem der Messsensor die Messwerte erfassen kann,
• Befestigen des Kalibrierkörpers (27) über ein stabförmiges Befestigungselement (25) mit einem um eine erste Drehachse (17) drehbaren Teil (19) der Halteeinrichtung, sodass die Halteeinrichtung den Kalibrierkörper (27) hält und sodass eine Ausrichtung des Kalibrierkörpers (27) durch die Ausrichtung der Längsachse des stabförmigen Befestigungselements (25) definiert ist,
• Anordnen der Halteeinrichtung, sodass die erste Drehachse (17) gegen die Richtung einer zweiten Drehachse der Halteeinrichtung geneigt ist, wobei die zweite Drehachse die erste Drehachse (17) schneidet, oder die erste Drehachse (17) gegen eine Parallele der Richtung der zweiten Drehachse geneigt ist, wobei die zweite Drehachse windschief zu der ersten Drehachse verläuft, und
• Einstellen einer Ausrichtung des Kalibrierkörpers (27) durch Drehen des drehbaren Teils (19) der Halteeinrichtung um die erste Drehachse (17) und
• Einstellen einer Ausrichtung des Kalibrierkörpers (27) durch Drehen der Halteeinrichtung um die zweite Drehachse.

12. Verfahren nach einem der vorhergehenden Ansprüche, wobei der Messsensor zur Detektion der Ausrichtung und/oder Position des Kalibrierkörpers (27) zumindest einen Bereich eines drehbaren Teils und/oder eines fest mit dem drehbaren Teil (19) verbundenen Teils der Halteeinrichtung erfasst.

13. Verfahren nach dem vorhergehenden Anspruch, wobei der Messsensor zur Detektion der Ausrichtung und/oder Position des Kalibrierkörpers (27) eine Markierung (20) des drehbaren Teils und/oder des fest mit dem drehbaren Teil (19) verbundenen Teils der Halteeinrichtung erfasst und wobei die Markierung (20) kegelförmig ist.

14. Verfahren nach dem vorhergehenden Anspruch, wobei der drehbare Teil (19) der Einstelleinrichtung (11, 19) in einer Drehstellung, die vorzugsweise eine von einer Mehrzahl diskreter, vorgegebener Drehstellungen ist, relativ zu einem anderen Teil der Halteeinrichtung fixiert wird.

15. Verfahren nach einem der vorhergehenden Ansprüche, wobei an einer Anzeigeeinrichtung (13, 15) der Halteeinrichtung abgelesen wird, in welcher Ausrichtung und/oder Position sich der Kalibrierkörper (27) relativ zu der Halteeinrichtung befindet.

## Claims

1. Holding device for holding a calibrating element (27) which, for calibrating a measuring sensor of a coordinate measuring machine, can be scanned by the measuring sensor, wherein
• the holding device has an adjusting mechanism (11, 19), which is designed to adjust an alignment of a calibrating element (27) held on the holding device by being actuated by a user,
• the adjusting mechanism (11, 19) has a rotatable part (19), which is rotatable with respect to another part (11) of the adjusting mechanism (11, 19) about a first axis of rotation (17), the calibrating element (27) being connected to the rotatable part (19) for its attachment to the holding device,
• the holding device has a rod-shaped attachment element (25), to which the calibrating element (27) can be attached, the rod-shaped attachment element (25) being connected to the rotatable part (19) in order to attach the calibrating element (27) to the holding device, so that an alignment of the calibrating element (27) is defined by the alignment of the longitudinal axis of the rod-shaped attachment element (25) and so that an alignment of the calibrating element (27) can be adjusted by a turning of the rotatable part (19) of the holding device about the first axis of rotation (17),
• the holding device is designed in such a way that at least a part (5) of the holding device is rotatable about a second axis of rotation, which intersects the first axis of rotation (17) at an angle or extends obliquely in relation to the first axis of rotation (17), so that the alignment of the calibrating element (27) is adjustable by turning movements about the first axis of rotation (17) and the second axis of rotation,
• with appropriate arrangement of the holding device, for example on a measuring table, the second axis of rotation extends in a vertical direction and the first axis of rotation (17) is inclined with respect to the vertical.

2. Device according to the preceding claim, wherein the rotatable part (19) or a part that is fixedly connected to the rotatable part has a marking (20), the position and/or alignment of which can be detected for a measuring sensor to be calibrated.

3. Device according to one of the preceding claims, wherein, with appropriate arrangement of the holding device, for example on a measuring table, if the second axis of rotation extends in a vertical direction the first axis of rotation (17) is inclined at an angle with respect to the vertical that lies in the range from 30 to 60 degrees, and is in particular 45 degrees.

4. Device according to one of the preceding claims, wherein the rotatable part (19) is a first spherical segment, which is rotatable about the first axis of rotation (17) in relation to the other part (11) of the adjusting mechanism (11, 19).

5. Device according to the preceding claim, wherein the first spherical segment (19) has an attachment device or a plurality of attachment devices (24), which allows or which allow the calibrating element (27) optionally to be attached to the spherical surface of the spherical segment (19) at different positions and/or with different alignment or a plurality of calibrating elements to be attached simultaneously at different locations of the spherical surface.

6. Device according to either of the two preceding claims, wherein the first axis of rotation (17) extends perpendicularly in relation to a circular surface, the circular surface being a bounding surface of the first spherical segment (19).

7. Device according to the preceding claim, wherein the first spherical segment (19) has a recess (21), which extends in the direction of the first axis of rotation (17) and arranged in which is a fixing element, with which the first spherical segment (19) can be fixed in an adjusted rotational position of the first spherical segment (19).

8. Device according to one of the preceding claims, wherein the rotatable part (19) of the adjusting mechanism (11, 19) can be fixed in a plurality of discrete rotational positions in relation to the other part of the adjusting mechanism (11, 19).

9. Device according to the preceding claim, wherein the rotatable part (19) and the other part (11) of the adjusting mechanism (11, 19) form a three-point bearing (40, 41, 42, 43) of the rotatable part (19), in the case of which three predetermined points of the rotatable part (19) can be positioned and can be fixed at discrete, predetermined positions of the other part (11).

10. Device according to one of the preceding claims, wherein the adjusting mechanism (11, 19) is combined with an indicating device (13, 15), which is designed to indicate a momentary state of the adjusting mechanism (11, 19).

11. Method for calibrating a measuring sensor of a coordinate measuring machine, wherein the measuring sensor can be calibrated by recording measured values, in particular coordinates of at least one point, of a calibrating element (27) and wherein the method has the following steps:
• arranging a holding device for holding the calibrating element (27) in a measuring area in which the measuring sensor can record the measured values,
• attaching the calibrating element (27) by means of a rod-shaped attachment element (25) to a part (19) of the holding device that is rotatable about a first axis of rotation (17), so that the holding device holds the calibrating element (27) and so that an alignment of the calibrating element (27) is defined by the alignment of the longitudinal axis of the rod-shaped attachment element (25),
• arranging the holding device, so that the first axis of rotation (17) is inclined with respect to the direction of a second axis of rotation of the holding device, the second axis of rotation intersecting the first axis of rotation (17), or so that the first axis of rotation (17) is inclined with respect to a parallel of the direction of the second axis of rotation, the second axis of rotation extending obliquely in relation to the first axis of rotation, and
• adjusting an alignment of the calibrating element (27) by turning the rotatable part (19) of the holding device about the first axis of rotation (17) and
• adjusting an alignment of the calibrating element (27) by turning the holding device about the second axis of rotation.

12. Method according to one of the preceding claims, wherein, for detecting the alignment and/or position of the calibrating element (27), the measuring sensor records at least one area of a rotatable part and/or of a part that is fixedly connected to the rotatable part (19) of the holding device.

13. Method according to the preceding claim, wherein, for detecting the alignment and/or position of the calibrating element (27), the measuring sensor records a marking (20) of the rotatable part and/or of the part of the holding device that is fixedly connected to the rotatable part (19) and wherein the marking (20) is conical.

14. Method according to the preceding claim, wherein the rotatable part (19) of the adjusting mechanism (11, 19) is fixed in a rotational position, which is preferably one of a plurality of discrete, predetermined rotational positions, in relation to another part of the holding device.

15. Method according to one of the preceding claims, wherein an indicating device (13, 15) of the holding device is used to read off in what alignment and/or position the calibrating element (27) is in relation to the holding device.

## Revendications

1. Dispositif de retenue pour retenir un corps d'étalonnage (27) à balayer par le capteur de mesure pour étalonner un capteur de mesure d'un appareil de mesure de coordonnées ;
- le dispositif de retenue comportant un dispositif de réglage (11, 19) configuré pour régler un alignement d'un corps d'étalonnage (27) maintenu au niveau du dispositif de retenue par actionnement d'un utilisateur ;
- le dispositif de réglage (11, 19) comportant une partie pivotable (19) pouvant être pivotée autour d'un premier axe de rotation (17) par rapport à une autre partie (11) du dispositif de réglage (11, 19), le corps d'étalonnage (27) étant relié à la partie pivotable (19) pour le fixer au dispositif de retenue ;
- le dispositif de retenue comportant un élément de fixation (25) en forme de tige au niveau duquel le corps d'étalonnage (27) doit être fixé, l'élément de fixation (25) en forme de tige étant relié à la partie pivotable (19) pour fixer le corps d'étalonnage (27) au dispositif de retenue, de sorte qu'un alignement du corps d'étalonnage (27) est défini par l'alignement de l'axe longitudinal de l'élément de fixation (25) en forme de tige et de sorte qu'un alignement du corps d'étalonnage (27) peut être réglé par une rotation de la partie pivotable (19) du dispositif de retenue autour du premier axe de rotation (17) ;
- le dispositif de retenue est configuré de telle sorte qu'au moins une partie (5) du dispositif de retenue peut pivoter autour d'un deuxième axe de rotation croisant le premier axe de rotation (17) selon un certain angle ou s'étendant de travers par rapport au premier axe de rotation (17), de sorte que l'alignement du corps d'étalonnage (27) peut être réglé par les mouvements de rotation s'exerçant autour du premier (17) et du deuxième axe de rotation ;
- en cas d'agencement correspondant du dispositif de retenue, par exemple sur une table de mesure, le deuxième axe de rotation s'étend dans la direction verticale et le premier axe de rotation (17) est incliné par rapport à la verticale.

2. Dispositif selon la revendication précédente, la partie pivotable (19) ou une partie reliée fixement à la partie pivotable comportant un marquage (20) dont la position et/ou l'alignement peut être détecté pour un capteur de mesure à étalonner.

3. Dispositif selon l'une quelconque des revendications précédentes, le premier axe de rotation (17) étant incliné selon un angle, par rapport à la verticale, situé dans la plage allant de 30 à 60 degrés et notamment de 45 degrés en cas d'agencement correspondant du dispositif de retenue, par exemple sur une table de mesure, lorsque le deuxième axe de rotation s'étend dans la direction verticale.

4. Dispositif selon l'une quelconque des revendications précédentes, la partie pivotable (19) étant une première section sphérique pouvant pivoter autour du premier axe de rotation (17) par rapport à l'autre partie (11) du dispositif de réglage (11, 19).

5. Dispositif selon la revendication précédente, la première section sphérique (19) comportant un dispositif de fixation ou une pluralité de dispositifs de fixation (24) permettant de fixer le corps d'étalonnage (27) au choix à différentes positions et/ou avec un alignement différent au niveau de la surface sphérique de la section sphérique (19) ou de fixer une pluralité de corps d'étalonnage simultanément aux différents endroits de la surface sphérique.

6. Dispositif selon l'une quelconque des deux revendications précédentes, le premier axe de rotation (17) étant perpendiculaire à une surface circulaire, la surface circulaire étant une surface limite de la première section sphérique (19).

7. Dispositif selon la revendication précédente, la première section sphérique (19) comportant un évidement (21) s'étendant en direction du premier axe de rotation (17) dans lequel un élément de fixation est disposé et à l'aide duquel la première section sphérique (19) peut être fixée dans une position de rotation réglée de la première section sphérique (19).

8. Dispositif selon l'une quelconque des revendications précédentes, la partie pivotable (19) du dispositif de réglage (11, 19) pouvant être fixée dans une pluralité de positions de rotation distinctes par rapport à l'autre partie du dispositif de réglage (11, 19) .

9. Dispositif selon la revendication précédente, la partie pivotable (19) et l'autre partie (11) du dispositif de réglage (11, 19) formant un palier à trois points (40, 41, 42, 43) de la partie pivotable (19), dans lequel trois points prédéfinis de la partie pivotable (19) peuvent être positionnés et fixés à des positions prédéfinies distinctes de l'autre partie (11).

10. Dispositif selon l'une quelconque des revendications précédentes, le dispositif de réglage (11, 19) étant combiné à un dispositif d'affichage (13, 15) configuré pour afficher un état momentané du dispositif de réglage (11, 19).

11. Procédé pour étalonner un capteur de mesure d'un appareil de mesure de coordonnées, le capteur de mesure étant étalonné par détection de valeurs de mesure, notamment de coordonnées d'au moins un point, d'un corps d'étalonnage (27) et le procédé comportant les étapes suivantes :
- agencement d'un dispositif de retenue servant à retenir le corps d'étalonnage (27) dans une zone de mesure dans laquelle le capteur de mesure peut détecter les valeurs de mesure ;
- fixation du corps d'étalonnage (27) à une partie (19) du dispositif de retenue pouvant pivoter autour d'un premier axe de rotation (17) au moyen d'un élément de fixation (25) en forme de tige, de sorte que le dispositif de retenue maintient le corps d'étalonnage (27) et de sorte qu'un alignement du corps d'étalonnage (27) est défini par l'alignement de l'axe longitudinal de l'élément de fixation (25) en forme de tige ;
- agencement du dispositif de retenue, de sorte que le premier axe de rotation (17) est incliné par rapport à la direction d'un deuxième axe de rotation du dispositif de retenue, le deuxième axe de rotation croisant le premier axe de rotation (17) ou le premier axe de rotation (17) étant incliné par rapport à une parallèle de la direction du deuxième axe de rotation, le deuxième axe de rotation s'étendant de travers par rapport au premier axe de rotation ; et
- réglage d'un alignement du corps d'étalonnage (27) par rotation de la partie (19) du dispositif de retenue pouvant pivoter autour du premier axe de rotation (17) ; et
- réglage d'un alignement du corps d'étalonnage (27) par rotation du dispositif de retenue autour du deuxième axe de rotation.

12. Procédé selon l'une quelconque des revendications précédentes, le capteur de mesure détectant au moins une zone d'une partie pivotable et/ou d'une partie du dispositif de retenue reliée fixement à la partie pivotable (19) pour détecter l'alignement et/ou la position du corps d'étalonnage (27).

13. Procédé selon la revendication précédente, le capteur de mesure détectant un marquage (20) de la partie pivotable et/ou de la partie du dispositif de retenue reliée fixement à la partie pivotable (19) pour détecter l'alignement et/ou la position du corps d'étalonnage (27) et le marquage (20) prenant une forme conique.

14. Procédé selon la revendication précédente, la partie pivotable (19) du dispositif de réglage (11, 19) étant fixée par rapport à une autre partie du dispositif de retenue dans une position de rotation étant de préférence une position parmi une pluralité de positions de rotation prédéfinies distinctes.

15. Procédé selon l'une quelconque des revendications précédentes, le dispositif de retenue lisant au niveau d'un dispositif d'affichage (13, 15) l'alignement et/ou la position du corps d'étalonnage (27) par rapport au dispositif de retenue.
